# EUROPEAN PATENT SPECIFICATION

(11) **EP 3 298 983 B1**
(45) Date of publication and mention of the grant of the patent: **26.02.2020**
(21) Application number: 17192480.6
(22) Date of filing: 21.09.2017
(51) Int. Cl.: A61C 8/00, A61C 9/00

(54) **METHOD FOR REGISTERING IMPLANT ORIENTATION DIRECTLY FROM A DENTAL IMPRESSION**
VERFAHREN ZUR DIREKTEN REGISTRIERUNG DER IMPLANTATAUSRICHTUNG AUS EINEM ZAHNABDRUCK
PROCÉDÉ D'ENREGISTREMENT D'ORIENTATION D'IMPLANTS DIRECTEMENT À PARTIR D'UNE EMPREINTE DENTAIRE

(30) Priority: 21.09.2016 US 201662397888 P
(43) Date of publication of application: 28.03.2018
(73) Proprietor: Global Dental Science LLC, Scottsdale, AZ 85260 (US)
(72) Inventor: Van der Meer, Robert, 3023 BG Rotterdam (NL)
(74) Representative: V.O.

(56) References cited:
- EP-A2- 1 920 730
- WO-A1-2010/056330
- WO-A2-01/64127
- KR-B1- 101 461 105

## Description

### Field of Invention

The present invention relates to uniquely-shaped implant position transfer bodies used during the acquisition of dental impressions of the intra oral cavity of patients receiving artificial tooth replacement. The present invention further relates to one-piece scan bodies used during 3D-scanning of these dental impressions. More particularly, the present invention relates a method of the registration of implant position (coordinates) and/or orientation (direction vectors) within and from a dental impression.

### Background of the Invention

In the field of Cad/Cam manufacturing for dental prosthetic construction upon implants, one of the first tasks in the process involves creating one or more data sets of available information so that by means of 3D-scanning, gathering object data that includes gingiva contours, natural teeth elements and implant positions and orientation. The scanned object often is a stone or plastic model that includes implant replicas affixed to mimic the patient's intra oral anatomy, as is described in application WO2010056330. Other methods for 3D-scanning may involve other intra-oral scan procedure. Still other methods for 3D-scanning may involve the dental impressions in which transfer bodies are enclosed to which manufacturer-specific scan bodies are attached or screwed manually before scanning, as is described in application US20090220916.

### Summary of the Invention

The invention provides a method according to claim 1. In accordance with various aspects, a universal, one-piece scanbody is developed that may fit into the cavity in the dental impression. The cavity may be created by an identically shaped positive part, hereby referenced as an implant position transfer. The implant position transfer may be placed onto the implants before taking the impression. After taking the impression and creating cavities from the implant position transfer, one may place the scan body into its unique position in the cavity. In the Figures, the scan body is shown as being integral, or one piece. With the scan body in place, the impression can be scanned and the resulting dataset may be used to translate the exact position and orientation of the implants in relation to the gingiva, jaw, teeth of the patient, and other anatomical landmarks of the patient.

### Brief Description of the Drawings

A more complete understanding of the present invention may be derived by referring to the detailed description and claims when considered with the Figures, where like reference numbers refer to similar elements throughout the Figures, and:
FIG. 1 is a front perspective view of a edentulous jaw with multiple implants fixed into the jaw bone to carry an abutment as a basis for a fixed- or removable dental restoration.
FIG. 2 is a perspective view of a jaw with an implant fixed into the jaw bone and intended to carry an abutment as a basis for a fixed- or removable dental restoration.
FIG. 3a shows a side perspective view of the closed-tray impression taking process utilizing the inventive system; and
FIG 3b shows a view of the impression tray, with an cross section indicated by a-a.
FIG. 4a shows the a schematic view of gingiva tissue containing an implant, along with a cross section;
FIG 4b shows a cross section through the gigiva tissue containing an implant as shown in FIG 4a.
FIG. 5a shows a schematic view of gingiva tissue containing an implant, with the implant position transfer body shown in disassembled position.
FIG. 5b shows a surface and cross section view of the driver with a mating pocket that fits the coronal portion of the implant position transfer, according to an embodiment of the invention.
FIG 5c illustrates a schematic side cross-sectional view that shows the implant position transfer body attached to the implant by means of a internally threaded two piece implant anchor.
FIG. 6a shows a side perspective view of the impression putty material covering the gingiva contour and implant position transfer body,
FIG. 6b shows the cross-section the impression putty material covering the gingiva contour and implant position transfer body shown in FIG. 6a
FIG. 7a shows a side perspective view of the impression putty material having been impressed with the inventive structures.
FIG. 7b shows the cross-section of the impression putty material having been impressed with the inventive structures shown in FIG. 7a.
FIG. 8a shows a side perspective view of the impression putty material and the inventive scanbody.
FIG. 8b shows the same view of the scanbody positioned above cavity in the impression putty.
FIG. 9a illustrates a side perspective view of the inventive scanbody, according to embodiments of the invention.
FIG. 9b shows the scanbody fully engaged and locked in the impression putty.

### Detailed Description of Exemplary Embodiments of the Invention

The present invention may be described herein in terms of various components. It should be appreciated that such components may be realized by any number of structural materials and components configured to perform the specified functions. For example, the present invention may be practiced in any number of dental contexts and the exemplary embodiments relating 'Implant position transfer bodies and universal, one-piece, scan bodies to register implant orientation directly from a dental impression' are merely a few of the exemplary applications for the invention. For example, the principles, features and methods discussed herein may be applied to any method of impression taking and to any dental restoration or dental treatment.

In accordance with various aspects of the present embodiment of the invention, implant position transfer bodies and universal, one-piece, scan bodies are provided to register implant orientation by using a 3D-scanning procedure or other technique to acquire image data directly from a dental impression.

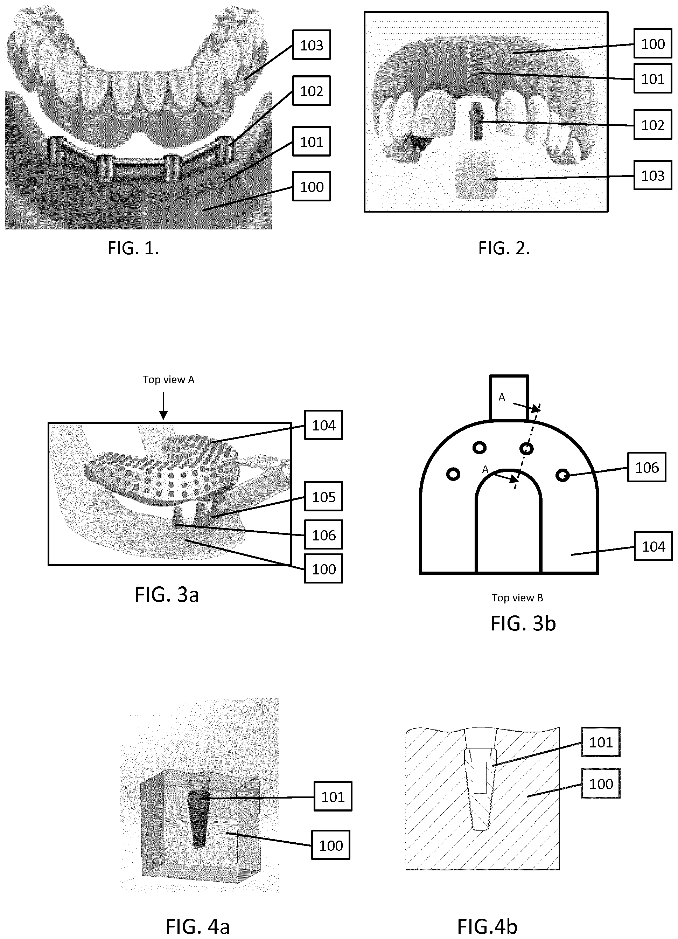

Looking at FIG. 1, a patient's edentulous jaw and gingiva 100 may comprise multiple implants 101 that may be fixed into the jaw bone and intended to carry an abutment 102 as a basis for a fixed- or removable dental restoration 103. Though this embodiment focuses upon a full arch replacement upon four (4) implants, other prosthetic solutions are well within the scope of invention.

For example, an embodiment depicting a single tooth prosthetic may be viewed in FIG. 2. The upper arch having an implant 101 fixed into the jaw bone is intended to carry an abutment 102 as a basis for a fixed- or removable dental restoration 102.

Regardless of the number of implants deployed to support a prosthetic solution, an embodiment of the invention may address FIG. 3 shows an overview of the closed-tray impression taking process, where a tray 104 may be filled with putty 105 and placed onto possible remaining teeth, gingiva tissue 100 and onto the implant position transfer bodies 106. After the curing time, the putty is hardened and will contain an impression of the remaining teeth, gingiva tissue and one or multiple cavities caused by the implant position transfer bodies.

Looking now to FIGs. 4a-b, a closer view of an example of a two piece implant is made, with an abutment emerging above the gingiva.

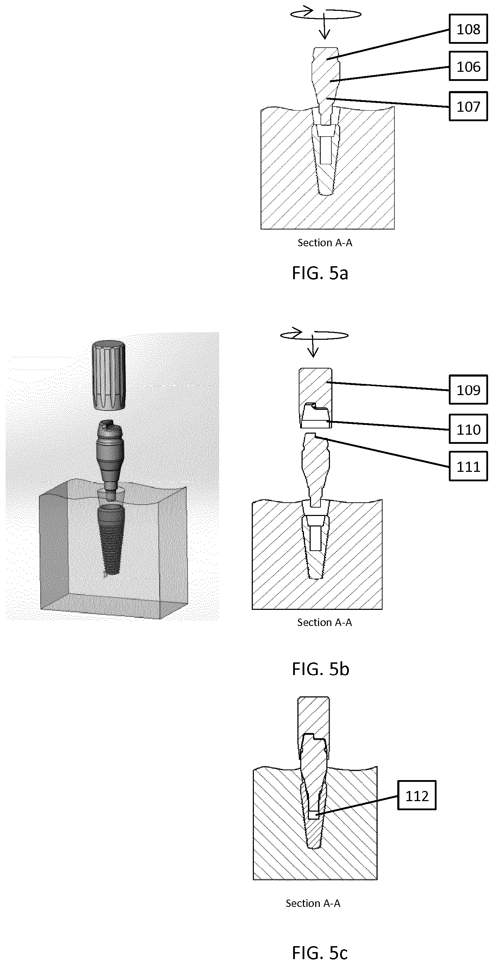

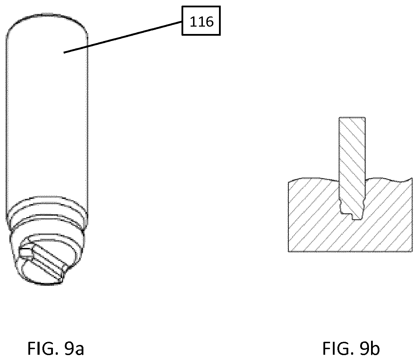

FIG. 5a continues to illustrate the jawbone/gingival tissue 100 and an implant anchor 101. In the embodiment illustrated, an implant position transfer body 105 is shown in a being threaded into the anchor portion of the two-piece implant, the implant abutment having been removed. The implant position transfer body may comprise an implant side and an impression side. A portion of the implant side 107 may be equipped to fit the implant interface. In Fig 5a-b, the portion of the implant side that fits the implant interface may comprise a threaded portion that mates to the internal threads of the implant anchor. In other embodiments of the invention, the implant side of the transfer body may have other structural configurations. The impression side 108 of the transfer body may have a unique shape that, upon transfer and registration to impression material, may create a slight undercut and universal, unique shaped, cavity in the impression material. As shown in Figs 5-7, the impression side may comprise, beginning at point along the transfer body that emerges from the implant anchor and extending towards the terminus of the impression side, a cylindrical portion, an undercut along an annular channel of the transfer body, a tapering portion with a decreasing circumference, and a terminus structure at the end of the impression side. In the example shown, the terminus structure may comprise first face having a perimeter and a shelf, with at least a portion of the perimeter being concentric with other circumferences of the implant transfer body. The shelf may intersect the perimeter of the face and extend to a second face being disposed at distally of the end of the impression side. First and second faces may be perpendicular to the perimeter, or may include a taper / grade. As Illustrated in Fig 9 of the scan body having the same structure at its impression end, the first face may resemble a semi or lesser portion of a circle from an axial point of view at the impression end.The shelf between the first and second face may include a groove or bevel into the terminus structure.

The impression side may include a feature or shape 111 that engages with a separate driver to find grip during rotation and seating of the transfer body. FIG. 5b shows a driver 109 comprising has a mating pocket 110 that fits the impression side of the implant position transfer. The impression side portion may include a screw to lock the transfer body onto the implant.The driver may mate with the transfer body through other structures, such as intermediary devices or indirect mating. In such a manner, the driver may enable the transfer body to be mounted onto the implant.

Moving to FIG 5c, the same view of the implant now includes the implant position transfer body attached to the implant by means of a threaded connection 112, the threaded connection being embodied as connecting with an internally threaded two piece implant anchor. However, other embodiments not shown of the invention and transfer body may include mating with other geometric configurations such as externally-threaded posts or other protruding structures, or other intermediary structures between the implant and transfer body.

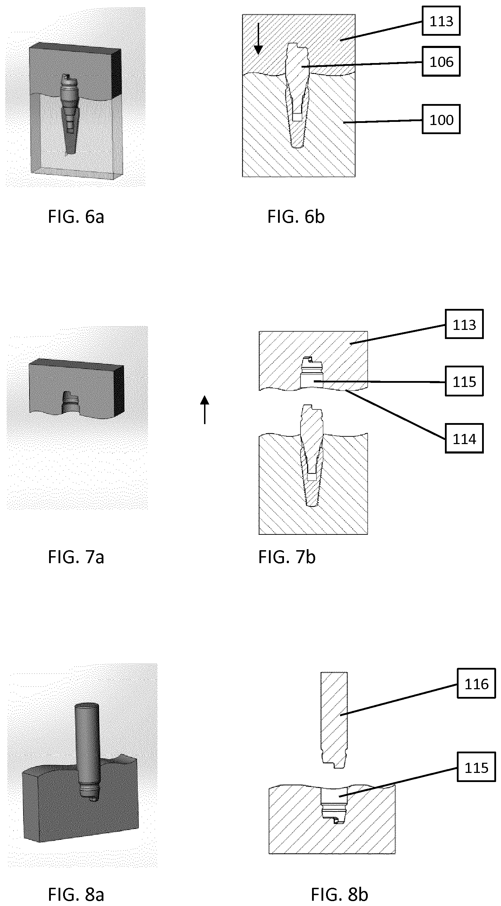

FIG. 6 indicates the process step where one may take an impression on the transfer body or bodies. The impression putty material 113 may be applied so that it may cover the gingiva contour 100 and implant position transfer body 106.

After removing the impression from the transfer body or bodies, it should register a number of cavities that correlate to each implant transfer body. FIG. 7. shows the impression putty material 113 having been impressed with the inventive structures. This view may assume that impression putty material 113 has hardened, and after the impression putty material 113 has been removed from the intraoral region of the patient. The impression putty material at this point in the process is shown as enclosing the negative shape of the gingiva contour 114 and the negative shape of the implant position transfer body, herein referenced as cavity 115.

The scan body may be then mounted into the cavities of the impression putty material. To ensure the scan bodies are mated into the cavities accurately, the undercuts of the scan bodies should match those in the cavity or cavities to ensure a friction fit. FIG. 8. shows the impression putty material and a one-piece scan body 116 that fits into the negatively molded cavity 115 in the impression putty. Scan body 116 may have the same style terminus structure as previously described at the impression side of the implant transfer body. As shown in Figs 8-9, the scan body may be a one piece structure, having a first end and a second, the first end extending towards the second end in a cylindrical geometric configuration, then an undercut, and a terminus structure 111 at the second end. The scan body may have other geometric configurations than a cylindrical shape, and may further comprise more than one piece. The scan body may comprise the implant transfer body that mates with a first end of the scan body, forming a structure largely similar to that seen in Fig 8 and 9. The terminus portion may aid in locking the scan body may be locked into the impression material. The translation of the scan body into impression material may be cylindrical, tapered, or have other anti-rotational structures known in the dental arts. Figure 9a shows a enlarged view of the scan body 116 described above and having a terminus structure at the second end, with the scan body 116 being fit into the cavity 115 of impression putty material in 9b. The exterior of scan body, especially that on the first end, may be optimized for 3 (point plane) -2 (line) -1(line) registration to be captured with image acquisition hardware. The scan body may comprise optical markers to be captured by an optical 3D scanner.

As described above, it is within the scope of the invention to have multiple scan bodies secured into multiple cavities of the impression material putty. Having the scan bodies disposed in the cavities that relate directly to implant position, the impression is ready for 3D scanning to acquire data for use in planning and designing the prosthetic to be created and seated upon the implants. It is further within the scope to offer a kit that comprises scan bodies, implant transfer bodies and a driver that may be utilized for the inventive system described herein.

## Claims

1. A method for registering implant orientation directly from a dental impression for acquiring data by imaging the dental impression, the method including:
• providing a system comprising:
- an implant position transfer body (106), said implant position transfer body (106) comprising:
∘ an implant side (107) to mate with a dental implant (101) affixed in a patient's jawbone (100),
∘ an impression side (108) having a terminus structure (111) at its end,
- a scan body (116) having a first end extending to a second end, the second end of the scan body having the same structure as the impression side (108) of the implant position transfer body (106),
• mating the transfer body (106) atop the dental implant (101);
• applying the impression side (108) in a dental impression material (113) when the transfer body (106) has been mated atop the dental implant material (101), thereby
• creating a defined cavity (115) in a dental impression when the dental impression material (113) hardens;
• securely fitting the second end of the scan body (116) in the defined cavity (115) of the dental impression; and
• acquiring the position and orientation of the implant by scanning the dental impression having the scan body, thereby registering implant orientation directly from the dental impression.

2. The method of claim 1, wherein the impression side (108) of the implant position transfer body (106) further comprises an annular undercut at the impression side (108) but between the terminus structure (111) and the implant end (107), the annular undercut enabling releasable retention with the dental impression.

3. The method of claim 2, wherein the terminus structure (111) further comprises a first face that includes a perimeter and a second face, the perimeter further intersecting a shelf that extends between the first face and second face.

4. The method of any one of claims 1-3, whereby the first end of the scan body (116) is optimized for 3 (point plane) -2 (line) -1(line) registration to be captured with image acquisition hardware.

5. The method of claim 4, wherein the scan body (116) further comprising optical markers to be captured by an optical 3D scanner.

6. The method according to any one of claims 1-5, whereby the undercut of the scan body (116) creates retention in the undercuts created in the cavity (115) of the impression so that it may be releasably attached within the impression.

7. The method according to any one of claims 1-6, wherein the system further comprises a driver (109) have an engagement end and a mating end, the mating end comprising cavity (110) that mates with the impression end (108) of the implant position transfer body (106) of claim 1 so that the driver (109) may engage the top shape of the transfer body (106).

8. The method of claim 7, the dental implant (101) being a two-piece implant having an internally threaded dental anchor (112) affixed in the patient's jawbone (100), whereby the driver (109) turns the implant transfer body (106) into the internally threaded dental anchor (112).

9. The method of claim 7 or 8, whereby the engagement end of the driver (109) comprises a plurality of axially-oriented gripping channels disposed in the surface of the driver.

10. The method according to any one of claims 1-9 and including at least the subject matter of claim 2, wherein the scan body (116) has a cylindrical profile extending from a point at its first end towards the annular undercut at its second end.

11. The method according to any one of claims 1-10 and including at least the subject matter of claim 2, the annular undercut resembling a groove about the scan body (116).

12. The method according to any one of claims 1-11 and including at least the subject matter of claim 3, wherein the first face has a lesser area than the second face.

13. The method according to any one of claims 1-12 and including at least the subject matter of claim 3, the impression end (108) having a tapering between the annular undercut and the second face.

14. The method according to any one of claims 1-13 and including at least the subject matter of claim 3, the shelf comprising a shelf groove extending between the first and second face of the scan body.

15. The method according to any one of claims 1-14, whereby the number of implant transfer bodies (106) and scan bodies (116) equal the number of implants to be impressed in the patient's jawbone (100).

## Patentansprüche

1. Verfahren zum Erfassen der Implantatausrichtung direkt von einem Dentalabdruck zum Erfassen von Daten durch Abbilden des Dentalabdrucks, wobei das Verfahren Folgendes umfasst:
• Bereitstellen eines Systems, umfassend:
- einen Implantatpositionsübertragungskörper (106), wobei der Implantatpositionsübertragungskörper (106) Folgendes umfasst:
∘ eine Implantatseite (107) zum Verbinden mit einem Dentalimplantat (101), das im Kieferknochen eines Patienten (100) befestigt ist,
∘ eine Abdruckseite (108) mit einer Abschlussstruktur (111) an ihrem Ende,
- einen Abtastkörper (116) mit einem ersten Ende, das sich zu einem zweiten Ende erstreckt, wobei das zweite Ende des Abtastkörpers die gleiche Struktur aufweist wie die Abdruckseite (108) des Implantatpositionsübertragungskörpers (106),
• Verbinden des Übertragungskörpers (106) auf dem Dentalimplantat (101);
• Aufbringen der Abdruckseite (108) in ein Dentalabdruckmaterial (113), wenn der Übertragungskörper (106) auf dem Dentalimplantatmaterial (101) verbunden wurde, wodurch
• ein definierter Hohlraum (115) in einem Dentalabdruck erzeugt wird, wenn das Dentalabdruckmaterial (113) aushärtet;
• sicheres Einpassen des zweiten Endes des Abtastkörpers (116) in den definierten Hohlraum (115) des Dentalabdrucks; und
• Erfassen der Position und Ausrichtung des Implantats durch Abtasten des Dentalabdrucks mit dem Abtastkörper, wodurch die Implantatausrichtung direkt aus dem Dentalabdruck registriert wird.

2. Verfahren nach Anspruch 1, wobei die Abdruckseite (108) des Implantatpositionsübertragungskörpers (106) ferner einen ringförmigen Hinterschnitt an der Abdruckseite (108), jedoch zwischen der Abschlussstruktur (111) und dem Implantatende (107) umfasst, wobei der ringförmige Hinterschnitt eine lösbare Retention mit dem Dentalabdruck ermöglicht.

3. Verfahren nach Anspruch 2, wobei die Abschlussstruktur (111) ferner eine erste Fläche umfasst, die einen Umfang einschließt und eine zweite Fläche, wobei sich der Umfang ferner mit einem Vorsprung überschneidet, der sich zwischen der ersten Fläche und der zweiten Fläche erstreckt.

4. Verfahren nach einem der Ansprüche 1 bis 3, wobei das erste Ende des Abtastkörpers (116) für eine Registrierung von 3 (Punktebene) -2 (Linie) -1 (Linie) optimiert ist, um mit Bildaufnahmegeräten aufgenommen zu werden.

5. Verfahren nach Anspruch 4, wobei der Abtastkörper (116) ferner optische Marker umfasst, die von einem optischen 3D-Scanner aufgenommen werden sollen.

6. Verfahren nach einem der Ansprüche 1 bis 5, wobei der Hinterschnitt des Abtastkörpers (116) eine Retention in den Hinterschnitten erzeugt, die in dem Hohlraum (115) des Abdrucks erzeugt werden, so dass er lösbar innerhalb des Abdrucks angebracht werden kann.

7. Verfahren nach einem der Ansprüche 1 bis 6, wobei das System ferner einen Mitnehmer (109) mit einem Eingriffsende und einem Verbindungsende umfasst, wobei das Verbindungsende einen Hohlraum (110) umfasst, der mit dem Abdruckende (108) des Implantatpositionsübertragungskörpers (106) nach Anspruch 1 verbunden wird, so dass der Mitnehmer (109) in die obere Form des Übertragungskörpers (106) eingreifen kann.

8. Verfahren nach Anspruch 7, wobei das Dentalimplantat (101) ein zweiteiliges Implantat mit einem im Kieferknochen (100) des Patienten befestigten Dentalanker (112) mit Innengewinde ist, wobei der Mitnehmer (109) den Implantatübertragungskörper (106) in den Dentalanker (112) mit Innengewinde dreht.

9. Verfahren nach Anspruch 7 oder 8, wobei das Eingriffsende des Mitnehmers (109) mehrere axial ausgerichtete Greifkanäle umfasst, die in der Oberfläche des Mitnehmers angeordnet sind.

10. Verfahren nach einem der Ansprüche 1 bis 9, das wenigstens den Gegenstand von Anspruch 2 umfasst, wobei der Abtastkörper (116) ein zylindrisches Profil aufweist, das sich von einem Punkt an seinem ersten Ende zu dem ringförmigen Hinterschnitt an seinem zweiten Ende erstreckt.

11. Verfahren nach einem der Ansprüche 1 bis 10, das wenigstens den Gegenstand von Anspruch 2 umfasst, wobei der ringförmige Hinterschnitt einer Nut um den Abtastkörper (116) ähnelt.

12. Verfahren nach einem der Ansprüche 1 bis 11, das wenigstens den Gegenstand von Anspruch 3 umfasst, wobei die erste Fläche eine geringere Fläche als die zweite Fläche aufweist.

13. Verfahren nach einem der Ansprüche 1 bis 12, das wenigstens den Gegenstand von Anspruch 3 umfasst, wobei das Abdruckende (108) eine Verjüngung zwischen dem ringförmigen Hinterschnitt und der zweiten Fläche aufweist.

14. Verfahren nach einem der Ansprüche 1 bis 13, das wenigstens den Gegenstand von Anspruch 3 umfasst, wobei der Vorsprung eine Vorsprungsnut umfasst, die sich zwischen der ersten und der zweiten Fläche des Abtastkörpers erstreckt.

15. Verfahren nach einem der Ansprüche 1 bis 14, wobei die Anzahl von Implantatübertragungskörpern (106) und Abtastkörpern (116) gleich der Anzahl von Implantaten ist, die in den Kieferknochen (100) des Patienten eingedrückt werden sollen.

## Revendications

1. Méthode pour enregistrer une orientation d'implant directement à partir d'une empreinte dentaire pour acquérir des données en imageant l'empreinte dentaire, la méthode comprenant les étapes consistant à :
• fournir un système comprenant :
- un corps de transfert de position d'implant (106), ledit corps de transfert de position d'implant (106) comprenant :
∘ un côté d'implant (107) destiné à un appariement avec un implant dentaire (101) fixé dans une mâchoire d'un patient (100),
∘ un côté d'empreinte (108) ayant une structure terminale (111) à son extrémité,
- un corps de balayage (116) ayant une première extrémité s'étendant jusqu'à une seconde extrémité, la seconde extrémité du corps de balayage ayant la même structure que le côté d'empreinte (108) du corps de transfert de position d'implant (106),
• apparier le corps de transfert (106) sur l'implant dentaire (101) ;
• appliquer le côté d'empreinte (108) dans un matériau d'empreinte dentaire (113) lorsque le corps de transfert (106) a été apparié sur le matériau d'implant dentaire (101), et ainsi
• créer une cavité définie (115) dans une empreinte dentaire lorsque le matériau d'empreinte dentaire (113) durcit ;
• ajuster de manière sûre la seconde extrémité du corps de balayage (116) dans la cavité définie (115) de l'empreinte dentaire ; et
• acquérir la position et l'orientation de l'implant en balayant l'empreinte dentaire ayant le corps de balayage, en enregistrant ainsi l'orientation d'implant directement à partir de l'empreinte dentaire.

2. Méthode selon la revendication 1, dans laquelle le côté d'empreinte (108) du corps de transfert de position d'implant (106) comprend en outre une contre-dépouille annulaire au niveau du côté impression (108) mais entre la structure terminale (111) et l'extrémité d'implant (107), la contre-dépouille annulaire permettant une rétention libérable avec l'empreinte dentaire.

3. Méthode selon la revendication 2, dans laquelle la structure terminale (111) comprend en outre une première face qui comprend un périmètre et une seconde face, le périmètre recoupant en outre un plateau qui s'étend entre la première face et la seconde face.

4. Méthode selon l'une quelconque des revendications 1 à 3, dans laquelle la première extrémité du corps de balayage (116) est optimisée pour un enregistrement 3 (plan de point) -2 (ligne) -1 (ligne) à capturer avec le matériel d'acquisition d'image.

5. Méthode selon la revendication 4, dans laquelle le corps de balayage (116) comprend en outre des marqueurs optiques à capturer par un dispositif de balayage optique 3D.

6. Méthode selon l'une quelconque des revendications 1 à 5, dans laquelle la contre-dépouille du corps de balayage (116) crée une rétention dans les contre-dépouilles créées dans la cavité (115) de l'empreinte de sorte qu'il peut être fixé de manière amovible à l'intérieur de l'empreinte.

7. Méthode selon l'une quelconque des revendications 1 à 6, dans laquelle le système comprend en outre un dispositif d'entraînement (109) qui a une extrémité de mise en prise et une extrémité d'appariement, l'extrémité d'appariement comprenant une cavité (110) qui s'apparie avec l'extrémité d'empreinte (108) du corps de transfert de position d'implant (106) de la revendication 1 de sorte que le dispositif d'entraînement (109) peut venir en prise dans la forme supérieure du corps de transfert (106).

8. Méthode selon la revendication 7, l'implant dentaire (101) étant un implant en deux pièces ayant un ancrage dentaire fileté intérieurement (112) fixé dans la mâchoire de patient (100), de sorte que le dispositif d'entraînement (109) fait tourner le corps de transfert d'implant (106) dans l'ancrage dentaire fileté intérieurement (112).

9. Méthode selon la revendication 7 ou 8, dans laquelle l'extrémité de mise en prise du dispositif d'entraînement (109) comprend une pluralité de canaux de préhension orientés axialement disposés dans la surface du dispositif d'entraînement.

10. Méthode selon l'une quelconque des revendications 1 à 9 et incluant au moins le sujet principal selon la revendication 2, dans laquelle le corps de balayage (116) a un profil cylindrique s'étendant d'un point au niveau de sa première extrémité vers la contre-dépouille annulaire au niveau de sa seconde extrémité.

11. Méthode selon l'une quelconque des revendications 1 à 10 et incluant au moins le sujet principal selon la revendication 2, la contre-dépouille annulaire ressemblant à une rainure autour du corps de balayage (116).

12. Méthode selon l'une quelconque des revendications 1 à 11 et incluant au moins le sujet selon la revendication 3, dans laquelle la première face a une surface inférieure à la seconde face.

13. Méthode selon l'une quelconque des revendications 1 à 12 et incluant au moins le sujet selon la revendication 3, l'extrémité d'empreinte (108) ayant un rétrécissement entre la contre-dépouille annulaire et la seconde face.

14. Méthode selon l'une quelconque des revendications 1 à 13 et incluant au moins le sujet principal selon la revendication 3, le plateau comprenant une rainure de plateau s'étendant entre la première et la seconde face du corps de balayage.

15. Méthode selon l'une quelconque des revendications 1 à 14, dans laquelle le nombre de corps de transfert d'implant (106) et de corps de balayage (116) est égal au nombre d'implants à imprimer dans la mâchoire de patient (100).
